# EUROPÄISCHE PATENTSCHRIFT

(11) **EP 2 305 081 B1**
(45) Veröffentlichungstag und Bekanntmachung des Hinweises auf die Patenterteilung: **01.05.2013**
(21) Anmeldenummer: 10405176.8
(22) Anmeldetag: 21.09.2010
(51) Int. Cl.: A47J 31/44

(54) **Getränkebereitungsmaschine zur Abgabe eines Getränkes aus Kaffee und/oder Milch und/oder Milchschaum**
Drink preparation machine for dispensing a drink comprising of coffee and/or milk and/or milk foam
Machine de préparation de boissons pour le dépôt d'une boisson à partir de café et/ou de lait et/ou de mousse de lait

(30) Priorität: 01.10.2009 EP 09405171
(43) Veröffentlichungstag der Anmeldung: 06.04.2011
(73) Patentinhaber: Jura Elektroapparate AG, 4626 Niederbuchsiten (CH)
(72) Erfinder: Büttiker, Philipp, 4625 Oberbuchsiten (CH)
(74) Vertreter: EGLI-EUROPEAN PATENT ATTORNEYS

(56) Entgegenhaltungen:
- EP-A1- 1 199 016
- DE-U1-202009 006 129

## Beschreibung

Die Erfindung bezieht sich auf eine Getränkebereitungsmaschine zur Abgabe eines Getränkes aus Kaffee und/oder Milch und/oder Milchschaum.

Es sind Getränkebereitungsmaschinen mit Abgabevorrichtungen für Milch und/oder Milchschaum bekannt, bei welchen Milch mit Dampf und gegebenenfalls Luft gemischt wird, um erwärmte Milch oder Milchschaum bzw. ein Gemisch aus erwärmter Milch und Milchschaum herzustellen. Getränkebereitungsmaschinen mit einer integrierten Abgabevorrichtung für Milch und/oder Milchschaum ermöglichen es bekanntlich, wahlweise Kaffee (ohne Zusatz von Milch) oder erwärmte Milch (ohne Zusatz von Kaffee) oder Milchkaffee (ohne Zusatz von Milchschaum) oder Kaffeespezialitäten, welche Milchschaum oder geschäumte Milch enthalten (beispielsweise Cappuccino oder Latte-Macchiato), herzustellen. Bei bekannten Auslaufeinheiten für Milch und/oder Milchschaum wird meist mit einem Dampfstrahl in einer geeignet geformten Kammer ein Unterdruck erzeugt (Venturi-Effekt), welcher es ermöglicht, aus einem mit Milch gefüllten Vorratsbehälter (Milchbehälter) eine Portion Milch über eine Leitung zwischen der Kammer und dem Vorratsbehälter anzusaugen und in die Kammer zu leiten. Um lediglich erwärmte Milch (ohne Milchschaum) herzustellen, kann die angesaugte Milch lediglich mit dem Dampf vermischt und dadurch erwärmt werden. Anschliessend kann das derart erzeugte Milch-Dampf-Gemisch in Form eines beruhigten Ausgangsstrahls aus der Auslaufeinheit in ein geeignetes Trinkgefäss abgegeben werden. Um Milchschaum bzw. geschäumte Milch herzustellen, kann mit dem Dampfstrahl zusätzlich Luft angesaugt werden und in der Kammer mit der jeweils angesaugten Milch vermischt werden. In dieser Variante kann ein Milch-Dampf-LuftGemisch in Form eines beruhigten Ausgangsstrahls aus der Kammer über einen Auslass in ein geeignetes Trinkgefäss abgegeben werden, wobei sich in diesem Fall eine Mischung aus erwärmter Milch und Milchschaum in dem Trinkgefäss sammelt.

Es sind Getränkebereitungsmaschinen bekannt, bei denen der Kaffeeauslauf und der Auslauf für Milch und/oder Milchschaum separate Befestigungen am Gehäuse der Getränkebereitungsmaschine aufweisen, nebeneinander angeordnet sind und unabhängig voneinander höhenverstellbar sind. In diesem Fall müsste ein unterhalb platziertes Trinkgefäß seitlich verschoben werden, um zeitlich nacheinander Kaffee und Milch und/oder Milchschaum in das Trinkgefäß fliessen zu lassen. Bei einigen Getränkebereitungsmaschinen erfolgt die Kaffeeausgabe, Milch- und/oder Milchschaumausgabe, Heisswasserausgabe und Dampfausgabe an unterschiedlich positionierten Auslaufeinheiten. So muss bislang ein Trinkgefäss unterhalb der jeweiligen Auslaufeinheit platziert werden. Zur Zubereitung eines Cappuccino-Getränks muss beispielsweise das Trinkgefäss zuerst unterhalb einer Auslaufeinheit für Milchschaum platziert werden, muss der Bezug des Milchschaums abgewartet werden und muss das Trinkgefäss dann unterhalb einer Auslaufeinheit für Kaffee zur Kaffeeausgabe platziert werden. Zum Aufbrühen eines Teegetränkes muss das Trinkgefäss unterhalb einer Auslaufeinheit für Heisswasser- und/oder Dampf, getrennt von der Auslaufeinheit für Kaffee, platziert werden. Dieses Umplatzieren des Trinkgefässes ist für den Benutzer unbequem und zeitaufwendig, da er die beiden aufeinanderfolgenden Schritte Milch-(Schaum)-Zugabe und Kaffeebezug an der Getränkebereitungsmaschine abwarten und überwachen muss. Innerhalb dieser Zeitspanne kann der Benutzer nur tatenlos abwarten.

Ausserdem kann der Benutzer durch die mehreren voneinander unabhängigen Ausgabestellen (Auslaufeinheiten) verwirrt werden, wenn er bei einem Getränkebezug zuerst überlegen muss, an welcher Position sein Trinkgefäss zur Zubereitung eines jeweiligen Getränkes zu platzieren ist. Ferner ist, bedingt durch das Vorhandensein voneinander getrennter Auslaufeinheiten, im Reinigungsfalle ein erhöhter Reinigungsaufwand von Nöten. Eine Getränkebereitungsmaschine mit mehreren Auslaufeinheiten, welche ihre Front durchbrechen, wirkt zudem unter ästhetischen Gesichtspunkten unschön und uneinheitlich. Mehrere Auslaufeinheiten lassen die Getränkebereitungsmaschine zudem in ihrem Ausmass breiter erscheinen, wodurch sie mehr Platz beansprucht und eventuell bei einem knappen Platzangebot nicht mehr aufgestellt werden kann.

Um einen möglichst grossen Verstellbereich der Höhe der Auslaufeinheit und somit der Höhe des jeweiligen Auslaufes zur Verfügung zu stellen, damit Tassen und Gläser unterschiedlicher Höhe verwendet werden können, ist es bekannt, die Auslaufeinheit höhenverstellbar an der Getränkebereitungsmaschine zu befestigen. Hierzu wird die Auslaufeinheit leichtgängig höhenverstellbar angeordnet und wobei sie an dieser Position mittels einer geeignet gewählten Reibungskraft verbleibt. Als nachteilig hat sich bei einer solchen Konstruktionsweise erwiesen, dass hierzu vorgesehene Auslaufschieber, die mit Adapter-Führungsteilen aus Kunststoff versehen sind, und über einen relativ grossen Verstellbereich höhenverstellbar sind, oft zu verringerter Formstabilität neigen. Die Verbindungssteifigkeit zwischen der Getränkebereitungsmaschine und der höhenverstellbaren Auslaufeinheit wird hierdurch beeinträchtigt und einige Teile fangen leicht an zu wackeln. Dies wird vom Benutzer häufig als mangelnde Qualität des Produktes wahrgenommen.

Die DE 202 20 056 U1 offenbart einen teleskopartig aufgebauten Auslaufschieber, über welchen Kaffee oder Heisswasser abgegeben wird. Der Auslaufschieber umfasst einen Blendenteil und einen Auslaufverteiler, wobei der Blendenteil höhenverstellbar am Gehäuse einer Kaffeemaschine befestigt ist und zu diesem Zweck mittels einer am Gehäuse der Kaffeemaschine befestigten Führung geführt ist. Der Auslaufverteiler ist in dem Blendenteil höhenverstellbar gelagert und zu diesem Zweck teleskopartig aus dem Blendenteil ausziehbar. Da der Auslaufverteiler in der Regel ein relativ grosses Gewicht hat, muss der Blendenteil sehr stark abgestützt werden, wozu die Führung zum Führen des Blendenteils sehr stabil ausgeführt werden muss. Um eine stabile Führung zu erreichen, weist der Blendenteil deshalb in der Regel ein grosse Breite auf. Daraus resultiert der Nachteil, dass dieser höhenverstellbare Auslaufschieber sehr voluminös ist und das Gehäuse der Kaffeemaschine entsprechend gross sein muss. Weiterhin entstehen hohe Kosten.

Die DE 10 2004 004 820 A1 offenbart eine Kaffeemaschine mit einem höhenverstellbaren Auslauf für die Entnahme von Kaffee. Der Auslauf enthält einen in einer Führung angeordneten Auslaufstutzen, welcher in einer Führung vertikal verschiebbar ist. Der Auslaufstutzen ist zu seiner Höhenverstellung mit einer Handhabe versehen, welche an einem Bereich des Auslaufstutzens angeordnet ist. Die Handhabe ist über einen Durchbruch an der Führung mit dem Auslaufstutzen verbunden. Hierbei ist der Durchbruch als ein vertikaler Schlitz ausgebildet, in dem die mit dem Auslaufstutzen verbundene Handhabe aufwärts und abwärts verschiebbar ist. Es besteht ein Nachteil darin, dass die Länge des Schlitzes begrenzt ist, wodurch auch insgesamt der Verstellweg des Auslaufstutzens begrenzt wird. Nachteilhafterweise kann somit nur eine begrenzte Anzahl von Trinkgefässen mit unterschiedlicher Höhe unterhalb des Auslaufstutzens platziert werden. Zudem besteht eine Verletzungsgefahr in dem Bereich des Durchbruches (vertikaler Schlitz). Ein Benutzer der Kaffeemaschine könnte einen Finger in den Durchbruch stecken und eine Bewegung der Handhabe in Richtung des Fingers könnte dazu führen, dass der Finger gequetscht wird. Ein weiterer Nachteil besteht darin, das Staub, Schmutz und/oder Flüssigkeiten in einen

Bereich des Auslaufes der Kaffeemaschine gelangen können.

Die EP 1 656 863 A1 offenbart eine Getränkebereitungsmaschine mit einem Milchauslauf, welcher auf einer Kreisbahn bewegbar ist und dabei in seiner Höhe veränderbar ist. Dieser Milchauslauf kann lediglich dann Milch abgeben, wenn er in einer bestimmten Höhenlage angeordnet ist. Es ist zudem eine Trinkgefäss-Plattform gezeigt, welche höhenverstellbar ist. Es besteht ein Nachteil darin, dass der Verfahrweg der Trinkgefäss-Plattform bauartbedingt sehr kurz ist. Ein weiterer Nachteil besteht darin, dass eine Halteeinrichtung zum Halten der Trinkgefäss-Plattform an einer jeweils gewählten Position dazu ausgelegt sein muss, ein sehr hohes Gewicht zu halten. Somit muss diese Halteeinrichtung sehr stabil ausgeführt sein, wodurch viel Platz in Anspruch genommen wird und hohe Kosten entstehen.

Die EP 1 745 726 B1 offenbart einen Kaffeeautomaten mit einer höhenverstellbaren Auslaufeinheit, welche ein Kaffeeauslaufrohr enthält, wobei die Auslaufeinheit gegenüber einer Tassenauflage stufenlos höhenverstellbar ist. Die Auslaufeinheit ist mittels eines Längskugellagers an dem Gehäuse des Kaffeeautomaten gelagert. Es besteht ein Nachteil darin, dass der vertikale Verfahrweg sehr kurz ist.

Der vorliegenden Erfindung liegt die Aufgabe zugrunde, die genannten Nachteile zu vermeiden, und eine Getränkebereitungsmaschine mit einer höhenverstellbaren Auslaufeinheit zu schaffen, welche einen langen Verstellweg hat und über den gesamten Verstellweg mit einfachen Mitteln stabil geführt werden kann und eine kompakte Bauweise (für die Auslaufeinheit bzw. die Kaffeemaschine) ermöglicht.

Diese Aufgabe wird gelöst durch eine Getränkebereitungsmaschine zur Abgabe eines Getränkes aus Kaffee und/oder Milch und/oder Milchschaum mit den Merkmalen des Patentanspruchs 1.

Die erfindungsgemässe Getränkebereitungsmaschine zur Abgabe eines Getränkes aus Kaffee und/oder Milch und/oder Milchschaum ist in Anspruch 1 definiert und enthält ein Gehäuse, eine Auslaufeinheit zur Abgabe von Kaffee und/oder Milch und/oder Milchschaum, welche höhenverstellbar aussen am Gehäuse angeordnet ist und mindestens einen Auslauf zur Abgabe von Milch und/oder Milchschaum und/oder Kaffee aufweist, und zumindest eine Leitung zum Zuführen von Milch und/oder Kaffee zu den jeweiligen Ausläufen. Die Auslaufeinheit umfasst einen Unterteil und einen relativ zum Unterteil bewegbaren Oberteil, wobei der Unterteil die jeweiligen Ausläufe trägt und zum Verstellen der Höhe der jeweiligen Ausläufe längs eines ersten Verstellweges zwischen einer tiefsten Position und einer höchsten Position relativ zum Gehäuse bewegbar ist, wobei der Oberteil längs eines zweiten Verstellweges zwischen einer tiefsten Position und einer höchsten Position relativ zum Gehäuse der Getränkebereitungsmaschine bewegbar ist, wobei die Getränkebereitungsmaschine eine am Gehäuse angeordnete Führung zum Führen des Unterteils längs des ersten Verstellweges umfasst, und wobei die Getränkebereitungsmaschine einen Anschlag für den Oberteil aufweist, welcher Anschlag derart ausgebildet ist, dass er den Oberteil an der tiefsten Position des zweiten Verstellweges hält und der Unterteil relativ zum Oberteil nach unten bewegbar ist, wenn sich der Unterteil in einem unteren Teilabschnitt des ersten Verstellweges befindet.

Dadurch, dass der Unterteil der Auslaufeinheit die jeweiligen Ausläufe zur Abgabe von Milch und/oder Milchschaum und/oder Kaffee trägt, ist der grösste Teil des Gewichts der Auslaufeinheit im Unterteil der Auslaufeinheit konzentriert. Dadurch, dass die Führung zum Führen des Unterteils längs des ersten Verstellweges direkt am Gehäuse angeordnet ist, kann der Unterteil mit einfachen, relativ wenig Platz beanspruchenden Mitteln entlang des ersten Verstellweges stabil geführt werden.

Dadurch, dass der Oberteil der Auslaufeinheit mithilfe des Anschlags an der tiefsten Position des zweiten Verstellweges gehalten werden kann und der Unterteil relativ zum Oberteil nach unten bewegbar ist, wenn sich der Unterteil in einem unteren Teilabschnitt des ersten Verstellweges befindet, wird erreicht, dass die Erstreckung der Auslaufeinheit in Richtung der Führung - in Abhängigkeit von der Position des Unterteils auf dem ersten Verstellweg - veränderbar ist. Mittels einer geeigneten Positionierung des Anschlags kann deshalb erreicht werden, dass die Führung - und gegebenenfalls eine im Gehäuse ausgebildete Öffnung zur Durchführung der Leitung zum Zuführen von Milch und/oder Kaffee zu den jeweiligen Ausläufen - auf der Aussenseite des Gehäuses der Kaffeemaschine vollständig abgedeckt wird oder zumindest derart abgedeckt wird, dass die Führung bzw. gegebenenfalls die Öffnung von der Aussenseite des Gehäuses her zumindest nicht zugänglich ist.

Die erfindungsgemässe Getränkebereitungsmaschine enthält somit eine Auslaufeinheit, welche über einen langen Verfahrweg vertikal verstellbar ist und trotzdem eine kompakte Bauweise (für die Auslaufeinheit bzw. die Kaffeemaschine) ermöglicht. Hierdurch können Trinkgefässe mit einer Vielzahl unterschiedlicher Höhen unterhalb der Auslaufeinheit platziert werden. Somit kann die Auslaufeinheit auf Höhe des oberen Randes des jeweils darunter platzierten Trinkgefässes platziert werden. Dadurch, dass die Höhe der Auslaufeinheit entsprechend gewählt werden kann, können unterhalb der Auslaufeinheit einerseits relativ hohe Latte-Macchiato-Gläser sowie auch relativ niedrige Espresso-Tassen platziert werden. Indem die Fallhöhe des Auslaufstrahls minimiert wird, kann somit auch das Herausspritzen von Flüssigkeiten beim Auftreffen des Strahls auf den Boden des Trinkgefässes bzw. auf den Flüssigkeitsspiegel deutlich reduziert werden. Zudem wird der Flüssigkeitsstrahl bei einer nunmehr kürzer eingestellten Distanz durch die Luft weniger stark abgekühlt, wodurch einer Abkühlung entgegengewirkt wird. Bei dem Bezug eines Kaffeegetränks wird zudem die Wahrscheinlichkeit reduziert, dass ein sich auf dem Kaffeegetränk ausbildender Kaffeeschaum (auch Crema genannt) zerstört wird.

Vorzugsweise enthält das Gehäuse eine längliche Öffnung, deren Längsrichtung sich im Wesentlichen vertikal erstreckt, durch welche Öffnung die zumindest eine Leitung gesteckt ist. In diesem Fall kann die Auslaufeinheit durch die längliche Öffnung hindurch mit Bereichen des Gehäuses und/oder der Getränkebereitungsmaschine höhenverstellbar befestigt werden. Des Weiteren stellt sich der Vorteil ein, dass die längliche Öffnung durch die Auslaufeinheit dauerhaft abgedeckt bzw. verborgen wird. Dies gilt hierbei unabhängig von der jeweiligen Position der Auslaufeinheit, das heisst, sowohl wenn sich die Auslaufeinheit an der tiefsten Position als auch an der höchsten Position relativ zum Gehäuse befindet. Hierdurch wird vermieden, dass Staub, Schmutz und/oder Flüssigkeiten in das Innere der Getränkebereitungsmaschine eintreten. Ein weiterer Vorteil besteht darin, dass das Verletzungsrisiko einer die Getränkebereitungsmaschine bedienenden Person reduziert wird. Die Person könnte sich beispielsweise die Finger quetschen, falls sie mit dem Finger in die längliche Öffnung greift und falls die Auslaufeinheit gleichzeitig in Richtung des Fingers bewegt wird. Es kann hierbei ausgeschlossen werden, dass sich die Person an der länglichen Öffnung verletzt bzw. sich die Finger quetscht, weil die längliche Öffnung dauerhaft verdeckt wird. Somit kann die Person erst gar nicht Gefahr laufen, mit dem Finger in die längliche Öffnung zu greifen.

Vorzugsweise weist ein oberes Ende des Oberteils, wenn sich der Oberteil an der tiefsten Position befindet, eine Höhe auf, welche grösser oder gleich einer Höhe eines oberen Endes der länglichen Öffnung ist. Hierdurch wird die längliche Öffnung im Gehäuse der Getränkebereitungsmaschine dauerhaft abgedeckt bzw. verborgen, wodurch vermieden wird, dass Staub, Schmutz und/oder Flüssigkeiten in das Innere der Getränkebereitungsmaschine eintreten. Zudem wird vermieden, dass sich eine Person an der Auslaufeinheit im Bereich der länglichen Öffnung verletzen kann bzw. die Finger quetschen kann.

Vorzugsweise enthält die Führung zwei Führungsflächen, zwischen denen der Unterteil geführt ist. Hierdurch wird die Auslaufeinheit über den Unterteil höhenverstellbar an der Getränkebereitungsmaschine geführt. Beispielsweise kann die Führung derart ausgebildet sein, dass die Auslaufeinheit, sobald von einer Person in einer jeweiligen Höhe positioniert, ohne weitere Feststellelemente an dieser Position verbleibt. Hierzu kann zwischen der Führung und der Auslaufeinheit eine entsprechend gewählte Reibung eingestellt werden, welche durch die Kraft der Person überwindbar ist und zudem die Auslaufeinheit an der entsprechend gewählten Position hält (ohne zusätzliche Mittel zum Halten der Auslaufeinheit).

Vorzugsweise enthält die Getränkebereitungsmaschine ein Federelement, welches mit dem Oberteil und dem Unterteil verbunden ist und derart vorgespannt ist, dass es an das Oberteil eine auf das Unterteil gerichtete Zugkraft anlegt. Hierbei wird der Oberteil, wenn sich die Auslaufeinheit an der tiefsten Position befindet, fest auf den Anschlag gedrückt. Durch den Anschlag wird der Oberteil an einer Position gehalten, bei welcher der obere Bereich der länglichen Öffnung verdeckt wird.

Vorzugsweise enthält die Auslaufeinheit mindestens zwei Ausläufe, wobei ein Auslauf zur Abgabe von Milch und/oder Milchschaum ausgebildet ist und der andere Auslauf zur Abgabe von Kaffee ausgebildet ist. Hierdurch dient die Auslaufeinheit gleichzeitig zum Bezug eines Kaffeegetränks und zum Bezug von Milch und/oder Milchschaum. Dies hat den Vorteil, dass das Trinkgefäss bei der Zubereitung von beispielsweise einem Cappuccino-Getränk an einer einzigen Position unterhalb der Auslaufeinheit platziert sein kann und nicht unterhalb von unterschiedlichen, räumlich getrennten Auslaufeinheiten umplatziert werden muss. Dieses Umplatzieren des Trinkgefässes zwischen einer Auslaufeinheit für Milch und/oder Milchschaum und einer separaten Auslaufeinheit für Kaffee wäre für den Benutzer unbequem und zeitaufwendig, da der Benutzer die beiden aufeinanderfolgenden Schritte Milch-(Schaum)-Zugabe und Kaffeebezug an der Getränkebereitungsmaschine abwarten und überwachen müsste. Durch die Bereitstellung lediglich einer Auslaufeinheit an der Getränkebereitungsmaschine werden zudem Kosten eingespart.

Vorzugsweise enthält die Auslaufeinheit eine Einrichtung zur Abgabe von Milch und/oder Milchschaum, in welche eine Leitung zum Zuführen von Milch, eine Leitung zum Zuführen von Dampf und eine Leitung zum Zuführen von Luft münden. Hierdurch werden alle Abschnitte, welche mit Milch in Verbindung kommen, zu einer Einheit zusammengefasst. Somit ist eine Reinigung sämtlicher Abschnitte, welche mit Milch in Kontakt treten, schnell und gründlich durchführbar.

Vorzugsweise sind wenigstens die Leitung zum Zuführen von Kaffee, die Leitung zum Zuführen von Dampf und der Auslauf zur Abgabe von Kaffee in einem einstückigen Blockelement ausgebildet. Somit kann der Unterteil lediglich zwei Elemente umfassen, nämlich das Blockelement und die Einrichtung zur Abgabe von Milch und/oder Milchschaum, welche beide jeweils einfach und kostengünstig herstellbar sind. Das Blockelement kann einen Aufsatz enthalten, auf welchen der Oberteil geführt ist, wobei der Aufsatz mittels Verbindungsmitteln, beispielsweise Schrauben, mit dem Blockelement verbunden wird oder einstückig mit dem Blockelement ausgebildet ist.

Vorzugsweise enthält die Einrichtung zur Abgabe von Milch und/oder Milchschaum eine Kammer, in welche die Leitung zum Zuführen von Milch, die Leitung zum Zuführen von Dampf und die Leitung zum Zuführen von Luft münden, und in welcher bei Einleitung des Dampfes ein Unterdruck erzeugbar ist, wobei die Kammer mit dem Auslauf zur Abgabe von Milch und/oder Milchschaum verbunden ist. Hierdurch wird bei der Einleitung des Dampfes in die Kammer innerhalb der Kammer ein Unterdruck erzeugt, durch welchen über die Leitung zum Zuführen von Milch ein Milchanteil in die Kammer angesaugt wird und über die Leitung zum Zuführen von Luft ein Luftanteil in die Kammer angesaugt wird. Innerhalb der Kammer werden die Milch und die Luft vermischt, wodurch der Milchschaum erzeugt wird. Wird die Zufuhr der Luft unterbunden bzw. abgesperrt, so wird innerhalb der Kammer kein Milchschaum gebildet, sondern wird lediglich die Milch angesaugt. Die Milch und/oder der Milchschaum wird dann über den Auslauf zur Abgabe von Milch und/oder Milchschaum in ein unterhalb der Auslaufeinheit platziertes Trinkgefäss abgegeben.

Vorzugsweise ist die Einrichtung zur Abgabe von Milch und/oder Milchschaum eine vom Blockelement separierbare Einheit. Durch diese Ausgestaltung kann die Einrichtung zur Abgabe von Milch und/oder Milchschaum leicht vom Blockelement bzw. der gesamten Auslaufeinheit getrennt werden und einer gründlichen und schnellen Reinigung unterzogen werden. Da lediglich die Einrichtung zur Abgabe von Milch und/oder Milchschaum mit Milch und/oder Milchresten in Kontakt tritt, braucht auch nur diese Einrichtung gründlich, beispielsweise unter fliessendem Wasser, gereinigt zu werden. Die restlichen Abschnitte der Auslaufeinheit, welche nicht mit Milch und/oder Milchresten in Kontakt treten, können auf herkömmliche Weise, beispielsweise mittels Durchleitung eines Heisswasserbezuges und/oder eines Dampfbezuges, gereinigt werden.

Vorzugsweise ist der Anschlag am Gehäuse und/oder an der Führung befestigt. Somit kann der Anschlag schnell und einfach an der Getränkebereitungsmaschine angebracht werden. Der Anschlag kann beispielsweise mittels Klebemittel und/oder einer Schraubverbindung am Gehäuse und/oder an der Führung zum Führen des Unterteils befestigt werden oder einstückig mit dieser Führung ausgebildet sein.

Vorzugsweise enthält der Oberteil eine Ausnehmung, in welche der Unterteil hineinragt. Somit dient der Oberteil als eine Kappe zum Abschluss des oberen Endes des Unterteils. Hierdurch wird vermieden, dass Staub, Schmutz und/oder Flüssigkeiten in den Unterteil eintreten.

Vorzugsweise ist an dem Unterteil wenigstens eine Führung zum Führen des Oberteils angeordnet. Somit ist der Oberteil zuverlässig in Relation zum Unterteil in seiner Höhe verstellbar. Beispielsweise kann die Führung derart ausgebildet sein, dass diese ein Verkanten zwischen Unterteil und Oberteil verhindert. Die Führung kann beispielsweise ein an der Aussenseite des Aufsatzes bzw. des Unterteils angeordnetes Führungselement enthalten, welches mit einem an der Innenseite des Oberteils angeordneten Gegenführungselement in Eingriff steht. Wie dem Fachmann bekannt, kann die Anordnung aus Führungselement und Gegenführungselement auch umgekehrt sein.

Weitere Einzelheiten der Erfindung und insbesondere beispielhafte Ausführungsformen der erfindungsgemässen Getränkebereitungsmaschine werden im Folgenden anhand der beigefügten Zeichnungen erläutert. Es zeigen:
- Fig. 1: zwei verschiedene Perspektiven einer erfindungsgemässen Getränkebereitungsmaschine mit einer höhenverstellbaren Auslaufeinheit zur Abgabe von Kaffee und/oder Milch und/oder Milchschaum, wobei sich die Auslaufeinheit am tiefsten Punkt eines Verstellweges befindet;
- Fig. 2: zwei verschiedene Perspektiven der Getränkebereitungsmaschine gemäss Fig. 1, wobei sich die höhenverstellbare Auslaufeinheit am höchsten Punkt des Verstellweges befindet;
- Fig. 3: eine Teilansicht der Getränkebereitungsmaschine gemäss Fig. 1, in einem vertikalen Schnitt durch ein Gehäuse der Getränkebereitungsmaschine und durch die Auslaufeinheit, wobei sich die Auslaufeinheit am tiefsten Punkt des Verstellweges befindet;
- Fig. 4: eine Teilansicht der Getränkebereitungsmaschine gemäss Fig. 1, in einem vertikalen Schnitt durch das Gehäuse der Getränkebereitungsmaschine wie in Fig. 3, wobei die Auslaufeinheit in einer Seitenansicht für den Fall dargestellt ist, dass sie sich am tiefsten Punkt des Verstellweges befindet;
- Fig. 5: eine Teilansicht der Getränkebereitungsmaschine gemäss Fig. 1, in einer Frontansicht, wobei sich die Auslaufeinheit am höchsten Punkt des Verstellweges befindet;
- Fig. 6: eine Teilansicht der Getränkebereitungsmaschine gemäss Fig. 1, in einem vertikalen Schnitt durch das Gehäuse der Getränkebereitungsmaschine wie in Fig. 3, wobei die Auslaufeinheit in einer Seitenansicht für den Fall dargestellt ist, dass sie sich am höchsten Punkt des Verstellweges befindet; und
- Fig. 7: eine perspektivische Ansicht der Auslaufeinheit gemäss Fig. 1.

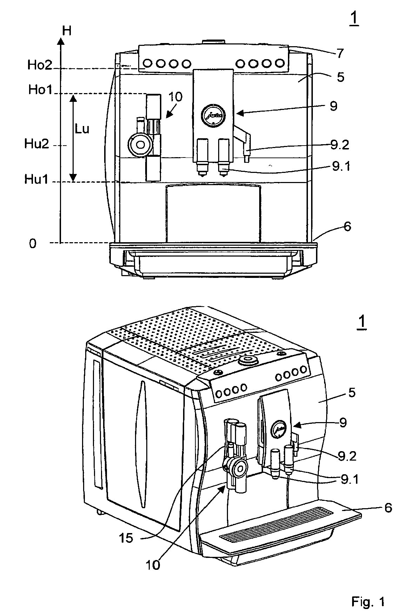

Figur 1 zeigt zwei verschiedene Perspektiven einer erfindungsgemässen Getränkebereitungsmaschine 1. Die Getränkebereitungsmaschine 1 enthält ein Gehäuse 5 und eine Plattform 6, welche als eine Ebene und waagerechte Fläche zum Abstellen von Trinkgefässen darauf ausgebildet ist. An der Oberseite des Gehäuses 5 ist ein Bedienfeld 7 angebracht, welches Tasten zur Bedienung der Getränkebereitungsmaschine 1 enthält. Über diese Tasten kann ein Bediener mehrere Bedienfunktionen auswählen. Die Getränkebereitungsmaschine 1 enthält ferner eine mittig angeordnete Auslaufeinheit 9, welche zwei Ausläufe 9.1 für Kaffee und einen seitlich angeordneten Auslauf 9.2 für Heisswasser enthält. Die zwei Ausläufe 9.1 für Kaffee sind voneinander derart beabstandet angeordnet, dass sie wahlweise ein auf der Plattform 6 platziertes Trinkgefäss oder zwei auf der Plattform 6 nebeneinander platzierte Trinkgefässe (nicht gezeigt) gleichzeitig mit einem Kaffeegetränk befüllen können. Der seitlich angeordnete Auslauf 9.2 für Heisswasser dient zur Abgabe von Heisswasser zur Zubereitung von beispielsweise einem Teegetränk.

Die Auslaufeinheit 9 ist in ihrer Höhe verstellbar, sodass eine Vielzahl von Trinkgefässen mit unterschiedlichen Höhen befüllt werden kann. Durch die Höhenverstellbarkeit der Auslaufeinheit 9 können somit allgemein hohe Gläser für Latte-Macchiato als auch kleine Tassen für Espresso befüllt werden. Hierbei sollten die Ausläufe 9.1 für Kaffee so tief wie möglich oberhalb der jeweils darunter platzierten Trinkgefässe positioniert werden. Hierdurch wird die Fallhöhe des Kaffeegetränks soweit wie möglich reduziert, sodass sich ein Kaffeeschaum, auch Crema genannt, auf dem im Trinkgefäss abgegebenen Kaffeegetränk bilden kann bzw. nicht zerstört wird. Indem die Fallhöhe des Auslaufstrahls minimiert wird, kann ferner das Herausspritzen von Flüssigkeiten beim Auftreffen des Strahls auf den Boden des Trinkgefässes bzw. auf den Flüssigkeitsspiegel deutlich reduziert werden. Zudem wird der Flüssigkeitsstrahl bei einer nunmehr kürzer eingestellten Distanz weniger stark durch die Luft abgekühlt.

Die Getränkebereitungsmaschine 1 enthält ferner eine Auslaufeinheit 10, deren Höhe ebenfalls, wie oben beschrieben, verstellbar ist. Diese Auslaufeinheit 10 gibt hierbei Kaffee und/oder Milch und/oder Milchschaum ab. Beispielsweise ist die Auslaufeinheit 10 zur kompletten Abgabe eines Cappuccino-Getränks ausgebildet und gibt hierzu innerhalb eines Bezuges gleichzeitig oder zeitlich nacheinander Kaffee und Milch und/oder Milchschaum ab. Obwohl die in der Figur beispielhaft angezeigte Getränkebereitungsmaschine 1 zusätzlich die Auslaufeinheit 9 zur Abgabe von Kaffee enthält, bräuchte der Bediener zum Bezug eines Cappuccino-Getränks sein Trinkgefäss lediglich unterhalb der Auslaufeinheit 10 zu platzieren. In der Figur 1 ist die Auslaufeinheit 10 an der tiefsten Position ihres Verstellweges platziert angezeigt.

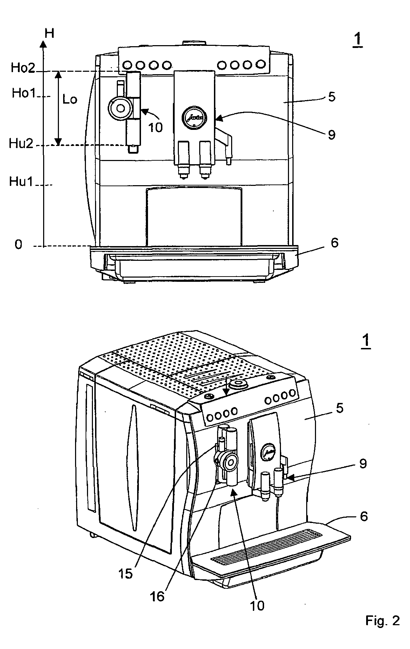

Figur 2 zeigt die gleichen Perspektiven der erfindungsgemässen Getränkebereitungsmaschine 1 gemäss Fig. 1, wobei sich hier die Auslaufeinheit 10 an der höchsten Position des Verstellweges befindet. Zur Führung der Auslaufeinheit 10 an einer Führung 15 ist das Gehäuse 5 der Getränkebereitungsmaschine 1 mit einem Schlitz 16 versehen, durch welchen ein Befestigungs- und Führungsabschnitt und eine oder mehrere Leitungen (nicht gezeigt) der Auslaufeinheit 10 durchgesteckt sind. Dieser Schlitz ist hierbei derart dimensioniert, dass die Auslaufeinheit 10 einen möglichst langen vertikalen Verstellweg hat. Somit werden die in Verbindung mit der Beschreibung der Auslaufeinheit 9 beschriebenen Vorteile erzielt. Die Länge des Schlitzes unterliegt jedoch Beschränkungen hinsichtlich der Dimensionierung der Getränkebereitungsmaschine 1. Es ist ferner gewünscht, dass der Schlitz 16, unabhängig von der vertikalen Position der Auslaufeinheit 10, abgedeckt oder zumindest nicht zugänglich ist. Somit wird vermieden, dass Staub, Schmutz und/oder Flüssigkeiten durch den Schlitz 16 hindurch in die Getränkebereitungsmaschine 1 gelangen. Ferner wird vermieden, dass sich der Bediener verletzen kann, indem er sich beispielsweise im Bereich des Schlitzes 16 die Finger quetschen kann. Ein weiterer Vorteil des dauerhaft verdeckten Schlitzes 16 ist unter ästhetischen Gesichtspunkten zu finden.

In den Figuren 1 und 2 sind jeweils längs einer Höhenachse H die jeweiligen Höhenniveaus der Auslaufeinheit 10 eingetragen, wobei die Oberfläche der Plattform 6 jeweils als ein Null-Höhe-Niveau eingetragen ist.

Längs der Höhenachse H sind in Figur 1, in welcher die Auslaufeinheit 10 in der untersten Position angezeigt ist, die Höhe des unteren Endes der Auslaufeinheit 10 mit Hu1 und die Höhe des oberen Endes der Auslaufeinheit 10 mit Ho1 gekennzeichnet. Mit Lu ist die Differenz dieser Höhen Hu1 und Hol angezeigt. Genauer gesagt, ist mit Lu die Längserstreckung der Auslaufeinheit 10 in Richtung einer Vertikalen gekennzeichnet, wenn sich die Auslaufeinheit 10 in der untersten Position befindet.

Längs der Höhenachse H sind in Figur 2, in welcher die Auslaufeinheit 10 in der obersten Position angezeigt ist, die Höhe des unteren Endes der Auslaufeinheit 10 mit Hu2 und die Höhe des oberen Endes der Auslaufeinheit 10 mit Ho2 gekennzeichnet. Mit Lo ist die Differenz dieser Höhen Hu2 und Ho2 angezeigt. Genauer gesagt, ist mit Lo die Längserstreckung der Auslaufeinheit 10 gekennzeichnet, wenn sich die Auslaufeinheit 10 in der obersten Position befindet.

Wie anhand der Figuren zu erkennen, ist die Längserstreckung Lu (Figur 1) länger als die Längserstreckung Lo (Figur 2). Hierdurch wird gewährleistet, dass der oben erwähnte Schlitz 16, unabhängig davon, ob sich die Auslaufeinheit 10 an der untersten Position oder an der obersten Position befindet, stets verdeckt bzw. nicht zugänglich ist.

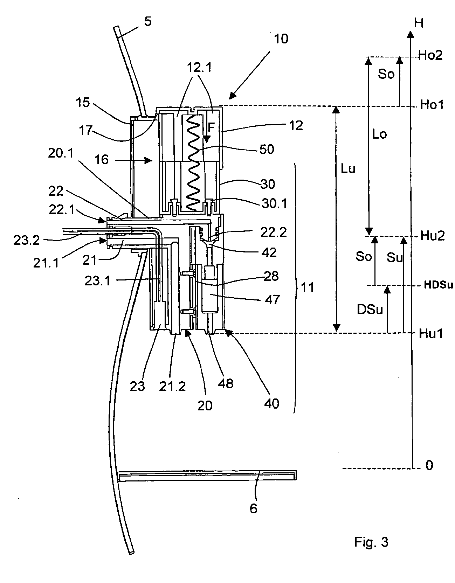

Figur 3 zeigt die an der Getränkebereitungsmaschine 1 angebrachte Auslaufeinheit 10 in Schnittansicht, wobei sich die Auslaufeinheit 10 an der tiefsten Position des Verstellweges befindet. Die Auslaufeinheit 10 ist aus einem Unterteil 11 und einem Oberteil 12 zusammengesetzt, welcher vertikal bewegbar auf dem Unterteil 11 aufgesetzt und geführt ist. Der Unterteil 11 setzt sich aus einem Blockelement 20, einem an dem Blockelement 20 angebrachten Aufsatz 30 und einer Einrichtung 40 zur Abgabe von Milch und/oder Milchschaum zusammen. Der Aufsatz 30 ist mithilfe von Befestigungsmitteln 30.1, beispielsweise Schrauben, an dem Blockelement 20 befestigt.

Der Oberteil 12 weist eine Ausnehmung 12.1 auf, in welche der Aufsatz 30 hineinragt. Das Blockelement 20 ist einstückig ausgebildet und enthält einen Eingang 21.1 für Kaffee, eine Leitung 21 zum Zuführen von Kaffee und einen Auslauf 21.2 zur Abgabe von Kaffee. Das Blockelement 20 enthält ferner einen Eingang 22.1 für Dampf und eine Leitung 22 zum Zuführen von Dampf, welche in einer Düse 22.2 mündet. Das Blockelement 20 enthält ferner eine Lichtquelle 23, beispielsweise eine LED, welche über ein elektrisches Kabel 23.1 mit Strom versorgt wird. Am anderen Ende des elektrischen Kabels 23.1 ist ein elektrischer Anschluss 23.2 angebracht. Die Lichtquelle 23 ist derart angeordnet, dass ein Raumbereich unterhalb des Auslaufs 21.2 beleuchtet werden kann.

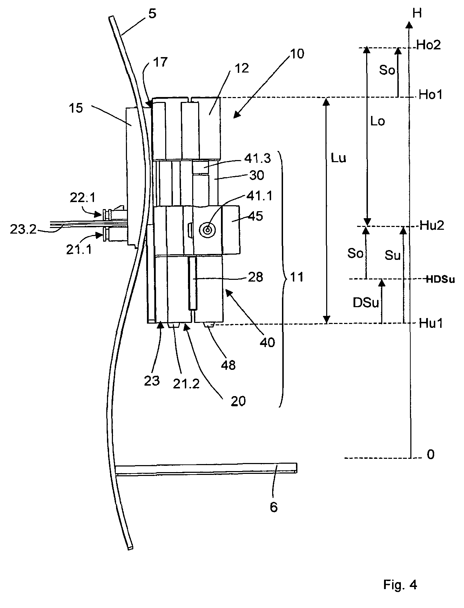

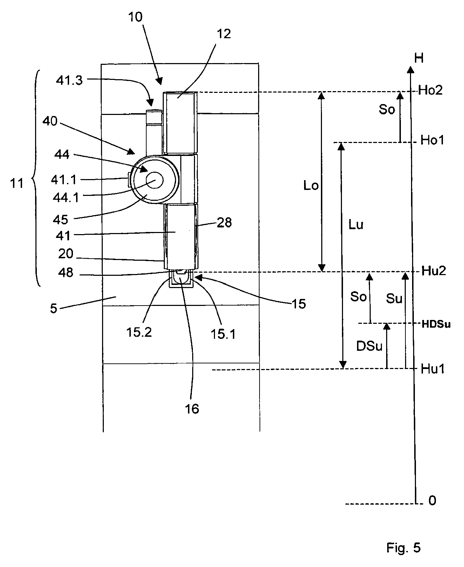

Die Einrichtung 40 zur Abgabe von Milch und/oder Milchschaum ist leicht separierbar am Blockelement 20 angebracht. Die Einrichtung 40 zur Abgabe von Milch und/oder Milchschaum enthält eine Kammer 42, deren Eingang im eingebauten Zustand der Einrichtung 40 zur Abgabe von Milch und/oder Milchschaum an das Blockelement 20 fluiddicht mit dem Ende der Düse 22.2 des Blockelements 20 abschliesst. Die Kammer 42 ist als eine Unterdruckkammer zur Erzeugung eines Unterdrucks nach dem Venturi-Effekt ausgebildet. Genauer gesagt, ist in der Kammer bei Einleitung eines Dampfes aus der Düse 22.2 ein Unterdruck erzeugbar, wodurch Fluide über Leitungen, welche mit der Kammer 42 verbunden sind, über diese Leitungen in die Kammer 42 angesaugt werden. Obwohl in der Figur 3 nicht dargestellt, münden in die Kammer eine Leitung zum Zuführen von Milch und eine Leitung zum Zuführen von Luft, was im Zusammenhang mit Fig. 4 und 5 noch näher erläutert wird. Somit werden bei Einleitung des Dampfes in die Kammer 42 gemäss dem Venturi-Prinzip Milch und Luft in die Kammer 42 angesaugt. Dieses Gemisch aus Milch, Luft und Dampf lässt die Milch zu einem Milchschaum aufschäumen. Dieser Milchschaum wird in eine stromabwärts zur Kammer 42 angeordnete Emulsionskammer 47 geleitet, in welcher sich der Milchschaum beruhigt. Anschliessend gelangt der beruhigte Milchschaum über einen Auslauf 48 zur Abgabe von Milch und/oder Milchschaum in ein unterhalb auf der Plattform 6 platziertes Trinkgefäss (nicht gezeigt).

Wie in der Figur 3 zu erkennen, ist die Auslaufeinheit 10 über den Unterteil 11 vertikal führbar aussen am Gehäuse 5 angeordnet. Hierzu enthält die Getränkebereitungsmaschine 1 eine am Gehäuse 5 angeordnete Führung 15 zum Führen des Unterteils 11 längs eines ersten Verstellweges Su zwischen der tiefsten Position Hu1 und der höchsten Position Hu2 relativ zum Gehäuse 5. Genauer gesagt, enthält die Führung 15 zwei Führungsflächen (welche in Fig. 3 nicht gezeigt sind, allerdings in Fig. 5 dargestellt und dort mit den Bezugszeichen 15.1 und 15.2 bezeichnet sind), zwischen denen der Unterteil 11 geführt ist. Wie bereits oben erwähnt, setzt sich die Auslaufeinheit 10 aus dem Oberteil 12 und dem Unterteil 11 zusammen, wobei lediglich der Unterteil 11 vertikal verfahrbar an dem Gehäuse 5 der Getränkebereitungsmaschine 1 angebracht ist. Hierbei ist die Länge des ersten Verstellweg Su bestimmende bzw. limitierende längliche Öffnung (Schlitz) 16 dauerhaft verdeckt, und zwar unabhängig davon, ob sich das untere Ende des Unterteils 11 an der tiefsten Position Hu1 oder an der höchsten Position Hu2 relativ zum Gehäuse 5 befindet. Um Letzteres zu ermöglichen, ist der Oberteil 12 vertikal bewegbar an dem Unterteil 11 angebracht, wobei ein Federelement 50 mit dem Oberteil 12 und dem Unterteil 11 verbunden ist und ausserdem derart vorgespannt ist, dass es an das Oberteil 12 eine auf das Unterteil 11 gerichtete Zugkraft F anlegt (wie in Fig. 3 durch einen entsprechenden Pfeil angedeutet ist).

Ferner ist an dem Gehäuse 5 der Getränkebereitungsmaschine 1 ein Anschlag 17 für den Oberteil 12 angebracht. Der Anschlag 17 ist derart ausgebildet, dass er den Oberteil 12 an der in Figur 3 dargestellten tiefsten Position Hol eines zweiten Verstellweges So gegen die Zugkraft F der Feder 50 hält. Der Anschlag 17 und der Oberteil 12 sind hierbei derart angeordnet und positioniert, dass der Oberteil 12 den im Gehäuse 5 ausgebildeten Schlitz verdeckt. Genauer gesagt ist, wenn sich der Oberteil 12 an der tiefsten Position Hol befindet, ein oberes Ende des Oberteils 12 auf einer Höhe, welche grösser oder gleich einer Höhe des oberen Endes des im Gehäuse 5 ausgebildeten Schlitzes ist. Bei einem Verstellen des Unterteils 11 im Bereich des Weges DSu, beginnend von der untersten Position Hu1 bis zu einer Position HDSu, hält der Anschlag 17 den Oberteil 12 gegen die Vorspannung des Federelementes 50. Hierbei fährt der Unterteil 11 bzw. der Aufsatz 30 vertikal in die Ausnehmung 12.1, welche im Oberteil 12 ausgebildet ist. Längs des Verfahrweges So, beginnend von der Position HDSu bis zur Position Hu2, wird der Oberteil 12 nicht mehr durch den Anschlag 17 gehalten bzw. ist der Oberteil 12 nicht mehr an seiner untersten Position. Wie in der Figur zu erkennen, legt das obere Ende des Oberteils 12 hierbei den Weg So, beginnend bei der Höhe Hol und endend bei der Höhe Ho2, zurück. Wie in der Figur ferner zu erkennen, ist die insgesamt zurückgelegte Distanz Su (Su = DSu + So) des unteren Endes des Unterteils 11 grösser als die zurückgelegte Distanz So des oberen Endes des Oberteils 12. Durch diese teleskopartige Verstellung des Unterteils 11 und des Oberteils 12 in Relation zueinander, wird dauerhaft gewährleistet, dass der im Gehäuse 5 ausgebildete Schlitz, unabhängig von der jeweiligen Position der Auslaufeinheit 10, dauerhaft verdeckt ist oder zumindest derart abgedeckt ist, dass er nicht zugänglich ist.

Figur 4 zeigt eine Teilansicht der Getränkebereitungsmaschine 1 gemäss Figur 1, in einem vertikalen Schnitt durch das Gehäuse 5 wie in Fig. 3, wobei die Auslaufeinheit 10 in einer Seitenansicht für den Fall dargestellt ist, dass sie sich an der tiefsten Position des Verstellweges befindet. Um Doppelaufzählungen zu vermeiden, werden zur Beschreibung der Figur 4 lediglich jene Elemente beschrieben, welche aufgrund der unterschiedlichen Ansicht (oberste Position/unterste Position) in Figur 3 nicht zu erkennen sind. In dieser Darstellung ist ein Eingang 41.1 für Milch an einem Gehäuse des Unterteils 11 gezeigt. Über diesen Eingang 41.1 für Milch wird Milch über eine Leitung (nicht gezeigt) in die in Figur 3 angezeigte Kammer 42 angesaugt, sobald der Dampf in die Kammer 42 eingeleitet wird und in dieser somit der Unterdruck erzeugt wird. An diesen Eingang 41.1 für Milch kann ein Ende eines Milchschlauchs (nicht gezeigt) angeschlossen werden, wobei das andere Ende des Milchschlauchs in einen Milchvorrat getaucht ist. Der Unterteil 11 enthält ferner einen Eingang 41.3 für Luft, welcher mit einer Leitung verbunden ist (nicht gezeigt), welche ebenfalls in der in Figur 3 dargestellten Kammer 42 mündet. Über diese Leitung 41.3 wird Luft in die Kammer 42 angesaugt, sobald der Dampf in die Kammer 42 eingeleitet wird und in dieser somit der Unterdruck erzeugt wird.

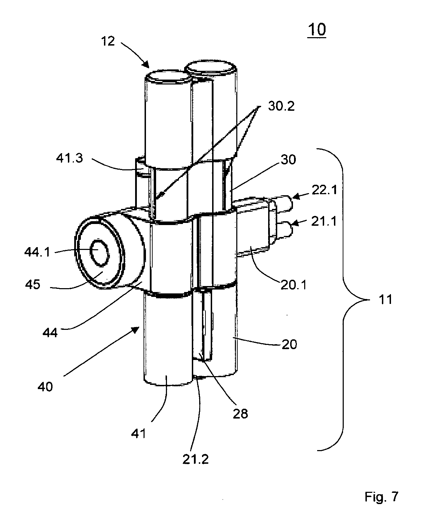

Figur 5 zeigt eine Teilansicht der Getränkebereitungsmaschine 1 gemäss Figur 1, in einer Frontansicht für den Fall, dass sich die Auslaufeinheit 10 an der höchsten Position des Verstellweges befindet. Wie in der Figur 5 zu erkennen, hat das obere Ende des Oberteils 12, im Verlaufe eines Verstellens der Auslaufeinheit 10 von der tiefsten Position zur höchsten Position, lediglich die Distanz So zurückgelegt. Gleichzeitig hat das untere Ende des Unterteils 11 die Distanz Su zurückgelegt. Hierbei ist die Distanz Su länger als die Distanz So. Durch diese teleskopartige Verstellung des Unterteils 11 und des Oberteils 12 in Relation zueinander ist gewährleistet, dass eine in der Figur 5 dargestellte längliche Öffnung 16 (Schlitz) im Gehäuse 5 dauerhaft, und zwar unabhängig von der jeweiligen Position der Auslaufeinheit 10, verdeckt ist. Hierbei verdeckt der Oberteil 12 im Wesentlichen den oberen Bereich der länglichen Öffnung 16, während ein Gehäuse 41 des Unterteils 11 im Wesentlichen den unteren Bereich der länglichen Öffnung 16 verdeckt. Somit wird dauerhaft vermieden, dass Staub, Schmutz und/oder Flüssigkeiten in das Innere der Getränkebereitungsmaschine 1 eindringen. Zudem wird das Verletzungsrisiko für einen Benutzer stark reduziert. Fig. 5 deutet ferner an, dass die Führung 15 zwei ebene Führungsflächen 15.1 und 15.2 zur Führung des Unterteils 11 umfasst, welche Führungsflächen sich jeweils entlang einer Vertikalen auf gegenüberliegenden Seiten der länglichen Öffnung 16 erstrecken und jeweils mit einem Abschnitt der Oberfläche des Unterteils 11 in Kontakt gebracht sind (was im Zusammenhang mit Fig. 7 noch näher erläutert wird).

Wie bereits oben beschrieben, ist die Auslaufeinheit 10 zur Abgabe eines Kaffeegetränks und zur Abgabe von Milch und/oder Milchschaum ausgebildet. Für den Fall, dass lediglich eine Abgabe von Milch gewünscht ist, wird keinerlei Luft in die in Figur 3 dargestellte Kammer 42 angesaugt. Durch Einleiten von Dampf in die Kammer 42 wird in diesem Fall lediglich die Milch aus dem Milchvorrat angesaugt, welche Milch dann - ohne mit Luft gemischt und somit ohne aufgeschäumt zu werden - über den Auslauf 48 für Milch und/oder Milchschaum in ein darunter platziertes Trinkgefäss (nicht gezeigt) abgegeben wird. Im Falle der gewünschten Abgabe von Milchschaum, kann die Konsistenz des Milchschaums in Abhängigkeit der Durchflussmengen von Luft und/oder Milch eingestellt werden. Zur Regulierung dieser Durchflussmengen enthält die Auslaufeinheit 10 ein Ventil 44. Das Ventil 44 enthält eine drehbare Reglerachse 44.1, welche mit einem Drehknopf 45 verbunden ist, wobei die Durchflussmengen von Luft und/oder Milch durch Drehen der Reglerachse 44.1 mittels des Drehknopfes 45 veränderbar sind.

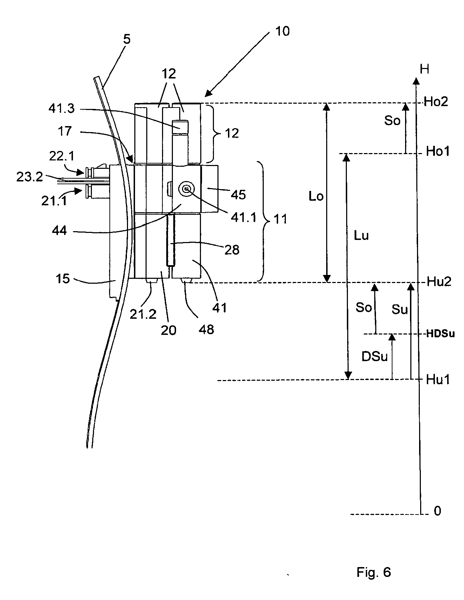

Figur 6 zeigt eine Teilansicht der Getränkebereitungsmaschine 1 gemäss Figur 1, in einem vertikalen Schnitt durch das Gehäuse 5 wie in Figur 3, wobei die Auslaufeinheit 10 in einer Seitenansicht für den Fall angezeigt ist, dass sie sich am höchsten Punkt des Verstellweges befindet. Bei dem Verschieben der Auslaufeinheit 10 von der tiefsten Position zur höchsten Position legt das untere Ende des Unterteils 11 zunächst die Distanz DSu zurück. Innerhalb des Verlaufes dieser Distanz wird der Oberteil 12 durch den Anschlag 17 an dem Gehäuse 5 der Getränkebereitungsmaschine 1 gehalten. Genauer gesagt, ist mit DSu die Länge des unteren Teilabschnitts des Weges Su des Unterteils 11 der Auslaufeinheit 10, für welchen Teilabschnitt der Oberteil 12 jeweils mittels des Anschlags 17 auf der untersten Höhe Ho1 gehalten wird (DSu= Lu - Lo), bezeichnet.

Nach dem Durchlaufen des unteren Endes des Unterteils 11 der Auslaufeinheit 10 über die Distanz DSu und innerhalb des Durchlaufens der Distanz So bis zur höchsten Position Hu2, wird der Oberteil 12 nicht mehr mittels des Anschlags 17 auf der tiefsten Position Hol relativ zum Gehäuse 5 gehalten, sondern bewegt sich mit dem Unterteil 11 nach oben. Hierbei legt das obere Ende des Oberteils 12 die gleiche Distanz So zurück. Somit ist insgesamt die Distanz So, welche das obere Ende des Oberteils 12 zurücklegt, kürzer als die Distanz Su (Su = DSu + So), welche das untere Ende des Unterteils 11 insgesamt zurücklegt. Durch diese teleskopartige Verschiebung des Unterteils 11 und des Oberteils 12 in Relation zueinander wird die im Gehäuse 5 ausgebildete längliche Öffnung 16 (in Fig. 6 nicht gezeigt) dauerhaft verdeckt, wobei gleichzeitig ein maximaler Verstellweg durch die teleskopartige Verschiebung gewährleistet wird.

Figur 7 zeigt eine perspektivische Ansicht der Auslaufeinheit 10 gemäss Figur 1. Innerhalb des Blockelementes 20 des Unterteils 11 der Auslaufeinheit 10 ist das Ventil 44 zur Regulierung eines jeweiligen Durchflusses von Milch und/oder Luft in die in Figur 3 dargestellte Kammer 42 angeordnet. Dieser jeweilige Durchfluss kann über die Reglerachse 44.1 des Ventils 44 reguliert werden, wobei in Abhängigkeit der Regulierung die Konsistenz des Milchschaums gewählt werden kann. Für den Fall, dass die Reglerachse 44.1 derart positioniert (gedreht) ist, dass keinerlei Luft zugeführt wird, gibt die Auslaufeinheit 10 bei jedem Bezug von Dampf lediglich Milch ab. Zum Betätigen bzw. Drehen der Reglerachse 44.1, und somit zum Regulieren des Ventils 44, ist an der Reglerachse 44.1 der Drehknopf 45 zum Verstellen der Reglerachse 44.1 angebracht. Wie in Figur 7 zu erkennen, enthält das Blockelement 20 einen Steg 20.1, an dessen äusseren Ende der Eingang 21.1 für Kaffee und der Eingang 22.1 für Dampf angeordnet sind. Das Blockelement 20 und der Steg 20.1 sind in dieser beispielhaften Ausführung einstückig ausgebildet.

Der Steg 20.1 ist derart geformt, dass er - eingeführt in den (in Fig. 5 dargestellten) Zwischenraum zwischen den vertikalen Führungsflächen 15.1 und 15.2 der Führung 15 - an den genannten Führungsflächen 15.1 und 15.2 vertikal geführt ist. In Figur 7 ist die Auslaufeinheit 10 in einer Situation dargestellt, in welcher sich der Oberteil 12 an seiner obersten Position in Relation zum Unterteil 11 befindet. Hierbei ist der Oberteil 12 an dem in Fig. 7 nicht gezeigten Anschlag 17, entgegen der auf den Unterteil 11 gerichteten Zugkraft F, welche durch das Federelement 50 gemäss Fig. 3 angelegt wird, gehalten. Bei einem Verstellen der Auslaufeinheit 10 von dieser tiefsten Position zur höchsten Position würde der Unterteil 11 entlang des Aufsatzes 30 in die Ausnehmung 12.1 gemäss Fig. 3 des Oberteils 12 gleiten. Hierzu sind zwei Führungen 30.2 an der Aussenseite des Aufsatzes 30 zum Führen des Oberteils 12 in Relation zum Unterteil 11 angeordnet.

## Patentansprüche

1. Getränkebereitungsmaschine (1) zur Abgabe eines Getränkes aus Kaffee und/oder Milch und/oder Milchschaum,
mit einem Gehäuse (5),
mit einer Auslaufeinheit (10) zur Abgabe von Kaffee und/oder Milch und/oder Milchschaum, welche höhenverstellbar aussen am Gehäuse (5) angeordnet ist und mindestens einen Auslauf (21.2, 48) zur Abgabe von Milch und/oder Milchschaum und/oder Kaffee aufweist, und
mit zumindest einer Leitung (21, 41.1) zum Zuführen von Milch und/oder Kaffee zu den jeweiligen Ausläufen (21.2, 48),
**dadurch gekennzeichnet, dass**
die Auslaufeinheit (10) einen Unterteil (11) und einen relativ zum Unterteil (11) bewegbaren Oberteil (12) umfasst,
wobei der Unterteil (11) die jeweiligen Ausläufe (21.2, 48) trägt und zum Verstellen der Höhe der jeweiligen Ausläufe (21.2, 48) längs eines ersten Verstellweges (Su) zwischen einer tiefsten Position (Hu1) und einer höchsten Position (Hu2) relativ zum Gehäuse (5) bewegbar ist,
wobei der Oberteil (12) längs eines zweiten Verstellweges (So) zwischen einer tiefsten Position (Ho1) und einer höchsten Position (Ho2) relativ zum Gehäuse (5) der Getränkebereitungsmaschine (1) bewegbar ist,
wobei die Getränkebereitungsmaschine (1) eine am Gehäuse (5) angeordnete Führung (15) zum Führen des Unterteils (11) längs des ersten Verstellweges (Su) umfasst, und wobei die Getränkebereitungsmaschine (1) einen Anschlag (17) für den Oberteil (12) aufweist, welcher Anschlag (17) derart ausgebildet ist, dass er den Oberteil (12) an der tiefsten Position (Ho1) des zweiten Verstellweges (So) hält und der Unterteil (11) relativ zum Oberteil (12) nach unten bewegbar ist, wenn sich der Unterteil (11) in einem unteren Teilabschnitt (DSu) des ersten Verstellweges (Su) befindet.

2. Getränkebereitungsmaschine (1) nach Anspruch 1, bei welcher das Gehäuse (5) eine längliche Öffnung (16) enthält, deren Längsrichtung sich im Wesentlichen vertikal erstreckt, durch welche Öffnung (16) die zumindest eine Leitung (21) gesteckt ist.

3. Getränkebereitungsmaschine (1) nach Anspruch 2, bei welcher, wenn sich der Oberteil (12) an der tiefsten Position (Ho1) befindet, ein oberes Ende des Oberteils (12) eine Höhe aufweist, welche grösser oder gleich einer Höhe eines oberen Endes der länglichen Öffnung (16) ist.

4. Getränkebereitungsmaschine (1) nach einem der vorhergehenden Ansprüche, welche ein Federelement (50) enthält, welches mit dem Oberteil (12) und dem Unterteil (11) verbunden ist und derart vorgespannt ist, dass es an das Oberteil (12) eine auf das Unterteil (11) gerichtete Zugkraft (F) anlegt.

5. Getränkebereitungsmaschine (1) nach einem der vorhergehenden Ansprüche, bei welcher die Auslaufeinheit (10) mindestens zwei Ausläufe (21.2, 48) enthält, wobei ein Auslauf (48) zur Abgabe von Milch und/oder Milchschaum ausgebildet ist und der andere Auslauf (21.2) zur Abgabe von Kaffee ausgebildet ist.

6. Getränkebereitungsmaschine (1) nach einem der vorhergehenden Ansprüche, bei welcher die Auslaufeinheit (10) eine Einrichtung (40) zur Abgabe von Milch und/oder Milchschaum enthält, in welche eine Leitung (41.1) zum Zuführen von Milch, eine Leitung (22) zum Zuführen von Dampf und eine Leitung (41.3) zum Zuführen von Luft münden.

7. Getränkebereitungsmaschine (1) nach Anspruch 6, bei welcher wenigstens die Leitung (21) zum Zuführen von Kaffee, die Leitung (22) zum Zuführen von Dampf und der Auslauf (21.2) zur Abgabe von Kaffee in einem einstückigen Blockelement (20) ausgebildet sind.

8. Getränkebereitungsmaschine (1) nach Anspruch 6 oder 7, bei welcher die Einrichtung (40) zur Abgabe von Milch und/oder Milchschaum eine Kammer (42) enthält, in welche die Leitung (41.1) zum Zuführen von Milch, die Leitung (22) zum Zuführen von Dampf und die Leitung (41.3) zum Zuführen von Luft münden, und in welcher bei Einleitung des Dampfes ein Unterdruck erzeugbar ist, wobei die Kammer (42) mit dem Auslauf (48) zur Abgabe von Milch und/oder Milchschaum verbunden ist.

9. Getränkebereitungsmaschine (1) nach Anspruch 7 oder 8, bei welcher die Einrichtung (40) zur Abgabe von Milch und/oder Milchschaum eine vom Blockelement (20) separierbare Einheit ist.

10. Getränkebereitungsmaschine (1) nach einem der vorhergehenden Ansprüche, bei welcher der Anschlag (17) am Gehäuse (5) und/oder an der Führung (15) befestigt ist.

11. Getränkebereitungsmaschine (1) nach einem der vorhergehenden Ansprüche, bei welcher der Oberteil (12) eine Ausnehmung (12.1) enthält, in welche der Unterteil (11) hineinragt.

12. Getränkebereitungsmaschine (1) nach einem der vorhergehenden Ansprüche, bei welcher an dem Unterteil (11) wenigstens eine Führung (30.2) zum Führen des Oberteils (12) angeordnet ist.

## Claims

1. A beverage preparation machine (1) for dispensing a beverage of coffee and/or milk and/or milk froth,
comprising a housing (5),
comprising an outlet unit (10) for dispensing coffee and/or milk and/or milk froth, which is arranged on the outside of the housing (5) so as to be height-adjustable and which encompasses at least one outlet (21.2, 48) for dispensing milk and/or milk froth and/or coffee, and
comprising at least one line (21, 41.1) for supplying milk and/or coffee to the respective outlets (21.2, 48),
**characterized in that**
the outlet unit (10) comprises a bottom part (11) and an upper part (12), which can be moved relative to the bottom part (11),
wherein the bottom part (11) supports the respective outlets (21.2, 48) and can be moved along a first displacement path (Su) between a lowest position (Hu1) and a highest position (Hu2) relative to the housing (5) for adjusting the height of the respective outlets (21.2, 48),
wherein the upper part (12) can be moved along a second displacement path (So) between a lowest position (Ho1) and a highest position (Ho2) relative to the housing (5) of the beverage preparation machine (1),
wherein the beverage preparation machine (1) comprises a guide (15), which is arranged on the housing (5), for guiding the bottom part (11) along the first displacement path (Su), and
wherein the beverage preparation machine (1) comprises a stop (17) for the upper part (12), said stop (17) being embodied such that it holds the upper part (12) on the lowest position (Ho1) of the second displacement path (So) and the bottom part (11) can be moved downwards relative to the upper part (12), when the bottom part (11) is located in a lower partial section (DSu) of the first displacement path (Su).

2. The beverage preparation machine (1) according to claim 1, in the case of which the housing (5) includes an elongate opening (16), the longitudinal direction of which extends substantially vertically, the at least one line (21) being inserted through said opening (16).

3. The beverage preparation machine (1) according to claim 2, in the case of which the upper part (12) is located at the lowest position (Ho1), an upper end of the upper part (12) encompassing a height, which is larger than or equal to a height of an upper end of the elongate opening (16).

4. The beverage preparation machine (1) according to one of the preceding claims, which includes a spring element (50), which is connected to the upper part (12) and the lower part (11) and which is pretensioned such that it applies a tractive force (F), which is directed to the bottom part (11), on the upper part (12).

5. The beverage preparation machine (1) according to one of the preceding claims, in the case of which the outlet unit (10) includes at least two outlets (21.2, 48), wherein one outlet (48) is embodied for dispensing milk and/or milk froth and the other outlet (21.2) is embodied for dispensing coffee.

6. The beverage preparation machine (1) according to one of the preceding claims, in the case of which the outlet unit (10) includes a device (40) for dispensing milk and/or milk froth, into which a line (41.1) for supplying milk, a line (22) for supplying steam and a line (41.3) for supplying air leads.

7. The beverage preparation machine (1) according to claim 6, in the case of which at least the line (21) for supplying coffee, the line (22) for supplying steam and the outlet (21.2) for dispensing coffee are embodied in a one-piece block element (20).

8. The beverage preparation machine (1) according to claim 6 or 7, in the case of which the device (40) for dispensing milk and/or milk froth includes a chamber (42), into which the line (41.1) for supplying milk, the line (22) for supplying steam and the line (41.3) for supplying air lead, and in which a low pressure can be created in response to the introduction of the steam, wherein the chamber (42) is connected to the outlet (48) for dispensing milk and/or milk froth.

9. The beverage preparation machine (1) according to claim 7 or 8, in the case of which the device (40) for dispensing milk and/or milk froth is a unit, which can be separated from the block element (20).

10. The beverage preparation machine (1) according to one of the preceding claims, in the case of which the stop (17) is fastened to the housing (5) and/or to the guide (15).

11. The beverage preparation machine (1) according to one of the preceding claims, in the case of which the upper part (12) includes a recess (12.1), into which the bottom part (11) extends.

12. The beverage preparation machine (1) according to one of the preceding claims, in the case of which at least one guide (30.2) for guiding the upper part (12) is arranged on the bottom part (11).

## Revendications

1. Machine de préparation de boissons (1) destinée à distribuer une boisson sur base de café et/ou de lait et/ou de mousse de lait, avec un corps (5),
avec une unité d'écoulement (10) pour distribuer du café et/ou du lait et/ou de la mousse de lait qui est disposée de manière réglable en hauteur à l'extérieur sur le corps (5) et qui comporte au moins une sortie (21.2, 48) pour distribuer du lait et/ou de la mousse de lait et/ou du café et
avec au moins un conduit (21, 41.1) pour alimenter du lait et/ou du café vers les sorties (21.2, 48) concernées,
**caractérisée en ce que** l'unité de sortie (10) comprend une partie inférieure (11) et une partie supérieure (12) mobile par rapport à la partie inférieure (11),
la partie inférieure (11) portant les sorties (21.2, 48) concernées et pour régler la hauteur des sorties (21.2, 48) concernées, étant mobile le long d'un premier trajet de réglage (Su) entre une position basse extrême (Hu1) et une position haute extrême (Hu2) par rapport au corps (5),
la partie supérieure (12) étant mobile le long d'un deuxième trajet de réglage (So), entre une position basse extrême (Ho1) et une position haute extrême (Ho2) par rapport au corps (5) de la machine de préparation de boissons (1),
la machine de préparation de boissons (1) comprenant un guidage (15) disposé sur le corps (5) pour guider la partie inférieure (11) le long du premier trajet de réglage (Su) et
la machine de préparation de boissons (1) comportant une butée (17) pour la partie supérieure (12), laquelle butée (17) est conçue de telle sorte que la partie supérieure (12) tienne dans la position basse extrême (Ho1) du deuxième trajet de réglage (So) et que la partie inférieure (11) soit mobile vers le bas, par rapport à la partie supérieure (12) lorsque la partie inférieure (11) se trouve dans une section partielle inférieure (DSu) du premier trajet de réglage (Su).

2. Machine de préparation de boissons (1) selon la revendication 1, sur laquelle le corps (5) contient un orifice (16) allongé dont la direction longitudinale s'étend sensiblement à la verticale, à travers lequel orifice (16) l'au moins un conduit (21) est inséré.

3. Machine de préparation de boissons (1) selon la revendication 2, sur laquelle, lorsque la partie supérieure (12) se trouve dans la position basse extrême (Hol), une extrémité supérieure de la partie supérieure (12) présente une hauteur qui est supérieure ou égale à une hauteur d'une extrémité supérieure de l'orifice (16) allongé.

4. Machine de préparation de boissons (1) selon l'une quelconque des revendications précédentes, laquelle contient un élément à ressort (50) qui est relié à la partie supérieure (12) et à la partie inférieure (11) et qui est précontraint de sorte à appliquer sur la partie supérieure (12) une force de traction (F) dirigée vers la partie inférieure (11).

5. Machine de préparation de boissons (1) selon l'une quelconque des revendications précédentes, sur laquelle l'unité de sortie (10) contient au moins deux sorties (21.2, 48), une sortie (48) étant conçue pour distribuer du lait et/ou de la mousse de lait et l'autre sortie (21.2) étant conçue pour distribuer du café.

6. Machine de préparation de boissons (1) selon l'une quelconque des revendications précédentes, sur laquelle l'unité de sortie (10) contient un système (40) de distribution de lait et/ou de mousse de lait dans lequel débouchent un conduit (41.1) d'alimentation de lait, un conduit (22) d'alimentation de vapeur et un conduit (41.3) d'alimentation d'air.

7. Machine de préparation de boissons (1) selon la revendication 6, sur laquelle au moins le conduit (21) est conçu pour l'alimentation de café, le conduit (22) est conçu pour l'alimentation de vapeur et la sortie (21.2) est conçue pour distribuer du café dans un élément en bloc (20) monobloc.

8. Machine de préparation de boissons (1) selon la revendication 6 ou la revendication 7, sur laquelle le système (40) de distribution de lait et/ou de mousse de lait contient un compartiment (42) dans lequel débouchent le conduit (41.1) d'alimentation de lait, le conduit (22) d'alimentation de vapeur et le conduit (41.3) d'alimentation d'air et dans lequel lors de l'introduction de la vapeur, il peut être créé une dépression, le compartiment (42) étant relié à la sortie (48) de distribution de lait et/ou de mousse de lait.

9. Machine de préparation de boissons (1) selon la revendication 7 ou la revendication 8, sur laquelle le système (40) de distribution de lait et/ou de mousse de lait est une unité séparable de l'élément en bloc (20).

10. Machine de préparation de boissons (1) selon l'une quelconque des revendications précédentes, sur laquelle la butée (17) est fixée sur le corps (5) et/ou sur le guidage (15).

11. Machine de préparation de boissons (1) selon l'une quelconque des revendications précédentes, sur laquelle la partie supérieure (12) contient un évidement (12.1) dans lequel la partie inférieure (11) saillit.

12. Machine de préparation de boissons (1) selon l'une quelconque des revendications précédentes, sur laquelle sur la partie inférieure (11) est disposé au moins un guidage (30.2) pour guider la partie supérieure (12).
